# EUROPEAN PATENT APPLICATION

(11) **EP 4 667 638 A1**
(43) Date of publication of application: **24.12.2025**
(21) Application number: 24756204.4
(22) Date of filing: 07.02.2024
(51) Int. Cl.: D06F 33/30, D06F 31/00

(54) **CONTROL METHOD FOR LAUNDRY TREATMENT SYSTEM**

(30) Priority: 13.02.2023 CN 202310106046
(71) Applicant: CHONGQING HAIER DRUM WASHING MACHINE CO., LTD., Chongqing 400026 (CN); HAIER SMART HOME CO., LTD., Qingdao, Shandong 266101 (CN)
(72) Inventor: WANG, Laisheng, Qingdao, Shandong 266101 (CN); FAN, Xianfeng, Qingdao, Shandong 266101 (CN); ZHAO, Zhilong, Qingdao, Shandong 266101 (CN); NIU, Zhongqian, Qingdao, Shandong 266101 (CN)
(74) Representative: Patentwerk B.V.
(86) International application number: PCT/CN2024/076544
(87) International publication number: WO 2024/169831

(57) **Abstract**

The present disclosure relates to the field of laundry treatment system, and specifically provides a control method for a laundry treatment system, which aims to solve the problem of how to control various laundry treatment devices at home through a single control screen while avoiding a single control screen being too large. To this end, the laundry treatment system of the present disclosure includes a control screen, a main controller, and multiple laundry treatment devices. The control screen is communicatively connected to each of the laundry treatment devices through the main controller. The control method implemented by the main controller includes: determining whether a cross-device coordination signal of a laundry treatment device can be obtained; retrieving control interface information of the laundry treatment device that generates the cross-device coordination signal, if the cross-device coordination signal of the laundry treatment device can be obtained; and controlling the control screen to display the control interface information. Through the above control method, it is possible to achieve the goal of avoiding an excessively large control screen while still being able to control various laundry treatment devices in the home through the control screen, thereby reducing production and use costs.

## Description

### CROSS-REFERENCE TO RELATED APPLICATIONS

The present application claims priority from Chinese patent application No. CN202310106046.0 filed on February 13, 2023, the entire disclosure of which is incorporated herein by reference.

### TECHNICAL FIELD

The present disclosure relates to the technical field of laundry treatment system, and specifically provides a control method for a laundry treatment system.

### BACKGROUND

At present, there often exists multiple laundry treatment devices in user's home, such as a washing machine (a wave washer or a drum washer), a dryer, a care machine, an external automatic drop-in bottom table, and the like.

For the control of the above multiple laundry treatment devices, the control method includes: each laundry treatment device has its own display control screen, and each control screen controls its own laundry treatment device, leading to resource and cost inefficiencies. Therefore, a "multi-control on one screen" method has emerged, that is, the control interfaces of multiple laundry treatment devices are displayed on one screen, thereby ensuring that all laundry treatment devices can be controlled through this one screen. Since the content displayed on the control interface occupies a large area, if the control interfaces of all laundry treatment devices are displayed on the screen, this method will cause the single screen to be too large, and the cost will not be reduced.

Accordingly, there is a need for a new control method for a laundry treatment system in the art to solve the above problem.

### SUMMARY

The present disclosure aims to solve the above technical problem, namely, how to control various laundry treatment devices at home through a single control screen while avoiding a single control screen being too large.

In a first aspect, the present disclosure provides a control method for a laundry treatment system, characterized in that the laundry treatment system includes a control screen, a main controller and multiple laundry treatment devices, the control screen is communicatively connected with each of the laundry treatment devices through the main controller, and the control method implemented by the main controller, includes: determining whether a cross-device coordination signal of the laundry treatment device can be obtained; retrieving control interface information of the laundry treatment device that generates the cross-device coordination signal, if the cross-device coordination signal of the laundry treatment device can be obtained; and controlling the control screen to display the control interface information.

In a preferred technical solution of the control method for the laundry treatment system described above, each of the laundry treatment devices is provided with a feedback switch, each of the feedback switches being configured to generate a door opening signal when a door of the corresponding laundry treatment device is opened; wherein the door opening signal is the cross-device coordination signal.

In a preferred technical solution of the control method for the laundry treatment system described above, a smart scene icon is also displayed on the control screen, and the smart scene icon is used to generate a control signal that enables a cross-device coordination of multiple laundry treatment devices only after being selected; before the step of "determining whether a cross-device coordination signal of the laundry treatment device can be obtained", the control method implemented by the main controller further includes: determining whether the smart scene icon is selected; starting to determine whether the cross-device coordination signal of the laundry treatment device can be obtained, if the smart scene icon is not selected.

In a preferred technical solution of the control method for the laundry treatment system described above, the main controller stores multiple different scene modes and multiple cross-device coordination programs between different laundry treatment devices associated with different scene modes. The control method implemented by the main controller further includes: controlling the control screen to display the scene mode, if the smart scene icon is selected; controlling, in response to the selected scene mode, the control screen to display each of the multiple cross-device coordination programs associated with the selected scene mode; controlling, in response to the selected cross-device coordination program, the cross-device coordination of the corresponding multiple laundry treatment devices.

In a preferred technical solution of the control method for the laundry treatment system described above, the cross-device coordination program includes starting up and shutting down the corresponding multiple laundry treatment devices in a preset order, and further includes controlling the control screen to send a prompt message when any one of the laundry treatment devices is started up or shut down.

In a preferred technical solution of the control method for the laundry treatment system described above, before the step of "the main controller determines whether the smart scene icon is selected", the control method implemented by the main controller further includes: reading a communication signal of each of the laundry treatment devices to determine the laundry treatment device that can read the communication signal; retrieving device icon information corresponding to the laundry treatment device that can read the communication signal; controlling the control screen to display the device icon information, so that the control screen displays associated control interface information after the device icon information is selected; wherein, the main controller stores the device icon information corresponding to each laundry treatment device, and each of the device icon information is associated with the control interface information corresponding to the laundry treatment device.

In a preferred technical solution of the control method for the laundry treatment system described above, the step of "controlling the control screen to display the scene mode, if the smart scene icon is selected" further includes: controlling the control screen to display the scene mode corresponding to the laundry treatment device that can read the communication signal, if the smart scene icon is selected.

In a preferred technical solution of the control method for the laundry treatment system described above, the control method implemented by the main controller further includes: controlling, in response to the selected device icon information, the control screen to display the control interface information associated with the selected device icon information, if the main controller does not obtain the cross-device coordination signal of the laundry treatment device.

In a preferred technical solution of the control method for the laundry treatment system described above, the control screen and the main controller are constructed on one of the laundry treatment devices.

In a preferred technical solution of the control method for the laundry treatment system described above, the laundry treatment device includes a washing machine, a dryer and a laundry care machine, and the scene modes include a wash and dry mode, a wash and care mode, a dry and care mode, and a wash-dry-care mode, wherein the wash and dry mode is associated with multiple cross-device coordination programs between the washing machine and the dryer, the wash and care mode is associated with multiple cross-device coordination programs between the washing machine and the laundry care machine, the dry and care mode is associated with multiple cross-device coordination programs between the dryer and the laundry care machine, and the wash-dry-care mode is associated with multiple cross-device coordination programs between the washing machine, the dryer and the laundry care machine.

It can be understood by those skilled in the art that the laundry treatment system of the present disclosure includes a control screen, a main controller, and multiple laundry treatment devices. The control screen is communicatively connected to each of the laundry treatment devices through the main controller. The control method implemented by the main controller includes: determining whether a cross-device coordination signal of the laundry treatment device can be obtained; retrieving control interface information of the laundry treatment device that generates the cross-device coordination signal if the cross-device coordination signal of the laundry treatment device can be obtained; and controlling the control screen to display the control interface information. Through the above control method, the control screen does not need to display the control interfaces of all laundry treatment devices in the home. When a user wants to use a certain laundry treatment device, they must open the door of the laundry treatment device, and when the door is opened, the control screen can only display the control interface information of the laundry treatment device, thereby allowing the user to control the laundry treatment device and eliminating the need for an excessively large control screen. In other words, the control method of the present disclosure can achieve the goal of avoiding an excessively large control screen while still being able to control various laundry treatment devices in the home through the control screen, thereby reducing production and use costs. In addition, the control method of the present disclosure can also save user operating steps, making the control operation of the laundry treatment devices simpler and more convenient.

Possibly, the control method implemented by the main controller of the present disclosure further includes: reading a communication signal of each of the laundry treatment devices to determine the laundry treatment device that can read the communication signal; retrieving device icon information corresponding to the laundry treatment device that can read the communication signal; and controlling the control screen to display the device icon information, so that the control screen displays associated control interface information after the device icon information is selected. The above control method enables the control screen to only display the laundry treatment devices present in the home, and to display them in the form of device icons. The control interface is not displayed until the device icon is selected, thereby reducing the content displayed on the control screen for the first time. The control screen can be designed to be smaller. After the device icon of a certain laundry treatment device is selected, only the control interface information of the laundry treatment device can be displayed on the control screen. This avoids the control screen from being too large while still allowing control of each of the laundry treatment devices.

Possibly, a smart scene icon is also displayed on the control screen. The smart scene icon is used to generate a control signal that enables a cross-device coordination of multiple laundry treatment devices only after being selected. The main controller also stores multiple different scene modes and multiple cross-device coordination programs between different laundry treatment devices associated with different scene modes. The control method of the present disclosure further includes: if the smart scene icon is selected, the main controller controls the control screen to display the scene mode; in response to the selected scene mode, the main controller controls the control screen to display each cross-device coordination program associated with the selected scene mode; in response to the selected cross-device coordination program, the main controller controls the cross-device coordination of the corresponding multiple laundry treatment devices. The above control method makes the operation very simple, and only by selecting the scene mode that is desired to be used, the corresponding multiple laundry treatment devices can be controlled to operate according to the set program, thereby improving the effect of laundry treatment, and at the same time, the intelligent control of multiple laundry treatment devices can be achieved through one control screen.

### BRIEF DESCRIPTION OF DRAWINGS

Preferred embodiments of the present disclosure will be described below in connection with the accompanying drawings, in which:
FIG. 1 is a main flow chart of the control method for the laundry treatment system of the present disclosure;
FIG. 2 is a flow chart I of a possible control method for the laundry treatment system of the present disclosure;
FIG. 3 is a flow chart II of a possible control method for the laundry treatment system of the present disclosure;
FIG. 4 is a possible logic diagram of the control method for the laundry treatment system of the present disclosure.

### DETAILED DESCRIPTION

First, it should be noted that these following embodiments are only used to explain the technical principle of the present disclosure, and are not intended to limit the scope of protection of the present disclosure. For example, although the various laundry treatment devices in the following embodiments are described in conjunction with a washing machine, a dryer, and a laundry care machine, this is not limiting. The technical solutions of the present disclosure can also be applied to external automatic drop-in trays, integrated washing and drying machines, sock washing machines, and the like. Such changes in the application objects do not deviate from the principles and scope of the present disclosure.

It should be noted that, in order to better illustrate the present disclosure, numerous details are provided in the specific embodiment below. It should be understood by those skilled in the art that the present disclosure can be implemented equally well without certain specific details.

In order to solve the problem of how to control various laundry treatment devices at home through a single control screen while avoiding a single control screen being too large. The present disclosure provides a control method for a laundry treatment system, the laundry treatment system comprising a control screen, a main controller and multiple laundry treatment devices, the control screen is communicatively connected with each of the laundry treatment devices through the main controller, wherein the multiple laundry treatment devices may be washing machines, dryers, and laundry care machines, etc., and each laundry treatment device may be connected to the main controller via Wi-Fi, Bluetooth, 3G, 4G, 5G, etc. Preferably, the control screen and the main controller are configured on one of the laundry treatment devices. For example, the main controller and the control screen are configured on the washing machine. That is, the controller of the washing machine is the main controller described in the present disclosure, and the display screen on the washing machine is the control screen described in the present disclosure. The remaining laundry treatment devices may not be provided with control screens, so that the various laundry treatment devices in the home can be controlled solely by the control screen on the washing machine, thereby reducing costs. Less preferably, the control screen and the main controller may be configured in a terminal, such as a mobile device, a computer, or a vehicle-mounted device built into a mobile vehicle, or any combination thereof. In some embodiments, the mobile device may include, for example, a mobile phone, a wearable device, a virtual reality device, etc., or any combination thereof.

Possibly, each of the laundry treatment devices is provided with a feedback switch, each of the feedback switches being configured to generate a door opening signal when a door of the corresponding laundry treatment device is opened. That is, when the door of any of the laundry treatment devices of the present disclosure is opened, a door opening signal is generated. It can be understood that the door of the laundry treatment device is openably and closably located at a loading port of the laundry treatment device. Wherein, the feedback switch may include a signal switch and a signal contact, the signal switch being located on the door of the laundry treatment device, the signal contact being located at the loading port of the laundry treatment device, and the signal switch and the signal contact being disengaged when the door is opened, thereby generating a door opening signal; or the signal switch being located at the loading port of the laundry treatment device, the signal contact being located on the door of the laundry treatment device, and the signal switch and the signal contact being disengaged when the door is opened, thereby generating a door opening signal. Of course, the above embodiments are not intended to limit the scope of protection of the present disclosure. As long as the feedback switch is capable of generating a door opening signal when the door of the laundry treatment device is opened, its specific form may be adjusted.

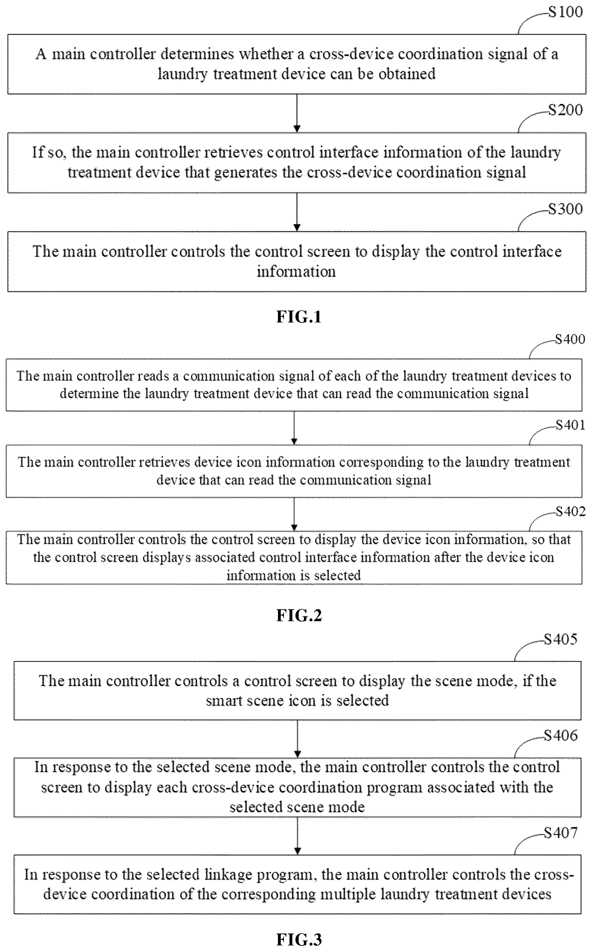

The control method of the laundry treatment system of the present disclosure is described below. As shown in FIG. 1, the control method implemented by a main controller of the present disclosure includes the following steps.

In step S 100, determining whether a cross-device coordination signal of a laundry treatment device can be obtained.

In a preferred embodiment, the cross-device coordination signal is a door opening signal of the laundry treatment device. In this case, when the door of the laundry treatment device is opened, the laundry treatment device generates a door opening signal and feeds the door opening signal back to the main controller, so that the main controller can obtain the door opening signal of the laundry treatment device. When the door of the laundry treatment device is not opened, the laundry treatment device does not generate a door opening signal and thus cannot feed the door opening signal back to the main controller, so that the main controller cannot obtain the door opening signal of the laundry treatment device.

Of course, the above embodiments are not intended to limit the scope of protection of the present disclosure. The cross-device coordination signal may also be other types of signals. For example, when a removable detergent dispensing box is provided on the laundry treatment device, a signal switch may be provided on the detergent dispensing box so that when the detergent dispensing box is pulled out, the signal switch is triggered, thereby generating a cross-device coordination signal and feeding back the cross-device coordination signal to the main controller. These do not deviate from the principles of the present disclosure and are all fall within the scope of protection of the present disclosure.

In step S200, the main controller retrieves control interface information of the laundry treatment device that generates the cross-device coordination signal, if the cross-device coordination signal of the laundry treatment device can be obtained.

As a preferred embodiment, the main controller pre-stores control interface information for each laundry treatment device. Therefore, the main controller can directly retrieve the control interface information corresponding to the laundry treatment device that generates the cross-device coordination signal. For example, when a dryer generates a door opening signal, the main controller directly retrieves the control interface information of the dryer. Less preferably, each laundry treatment device stores its own control interface information, and the laundry treatment device that generates the cross-device coordination signal can actively send the control interface information to the main controller, allowing the main controller to obtain and store the control interface information of the laundry treatment device. It should be noted that when the main controller is constructed on one of the laundry treatment devices, the control interface information of the laundry treatment device is directly stored in the main controller.

It should be noted that the laundry treatment device can be controlled through the control interface of the laundry treatment device. For example, the operation of the washing machine can be controlled through the control interface of the washing machine, the operation of the dryer can be controlled through the control interface of the dryer, and the operation of the laundry care machine can be controlled through the control interface of the laundry care machine.

In step S300, controlling the control screen to display the control interface information.

For example, when the laundry treatment device generating the door opening signal is a dryer, the control screen will display the control interface information of the dryer after retrieving the control interface information of the dryer. Wherein the control screen can display the control interface information in the form of images, text, etc. For example, the control interface information of the dryer is displayed in the form of hot air timing text, cold air timing text, and down drying text, etc. In this case, it is understandable that when the user clicks the hot air timing text, the washing machine directly runs a hot air timing program; when the user clicks the cold air timing text, the washing machine directly runs a cold air timing program; and when the user clicks the down drying text, the washing machine directly runs the down drying program.

Through the above control method, the control screen does not need to display the control interfaces of all laundry treatment devices in the home. When a user wants to use a certain laundry treatment device, they must open the door of the laundry treatment device, and when the door is opened, the control screen can only display the control interface information of the laundry treatment device, thereby allowing the user to control the laundry treatment device and eliminating the need for an excessively large control screen. In other words, the control method of the present disclosure can achieve the goal of avoiding an excessively large control screen while still being able to control various laundry treatment devices in the home through the control screen, thereby reducing production and use costs. In addition, the control method of the present disclosure can also save user operating steps, making the control operation of the laundry treatment devices simpler and more convenient.

As a possible embodiment, as shown in FIG. 2, before the step S100, the control method implemented by the main controller of the present disclosure further includes the following steps.

In step S400, reading a communication signal of each of the laundry treatment devices to determine the laundry treatment device that can read the communication signal.

In other words, after the control screen is activated, the main controller communicates with each laundry treatment device to determine whether it can obtain feedback from each laundry treatment device. When the main controller reads the communication signal of each laundry treatment device, it proves that the laundry treatment device is present in the home. It should be noted that when the main controller and the control screen are constructed on one of the laundry treatment devices, it means that the main controller can read the communication signal of the laundry treatment device. For example, when the main controller and the control screen are constructed on a washing machine, the main controller of the washing machine can read the communication signal of the washing machine itself.

In step S401, the main controller retrieves device icon information corresponding to the laundry treatment device that can read the communication signal.

Wherein, the main controller stores the device icon information corresponding to each laundry treatment device, and each of the device icon information is associated with the control interface information corresponding to the laundry treatment device. For example, if multiple laundry treatment devices include a washing machine, a dryer, and a laundry care machine, the main controller stores the device icon information of each washing machine, dryer, and laundry care machine. The device icon information can be displayed on the control screen in the form of cards, text, etc. For example, if the washing machine is associated with icon 1, then icon 1 is associated with the control interface information of the washing machine; if the dryer is associated with icon 2, then icon 2 is associated with the control interface information of the dryer; if the laundry care machine is associated with icon 3, then icon 3 is associated with the control interface information of the laundry care machine.

In step S402, controlling the control screen to display the device icon information, so that the control screen displays associated control interface information after the device icon information is selected.

For example, in the example of step S401, when the main controller is able to read the communication signals of the washing machine, the dryer and the laundry care machine, the main controller retrieves icon 1 corresponding to the washing machine, icon 2 corresponding to the dryer and icon 3 corresponding to the laundry care machine, and displays icon 1, icon 2 and icon 3 on the control screen, so that after icon 1 is selected, the control screen displays the control interface information of the washing machine, after icon 2 is selected, the control screen displays the control interface information of the dryer, and after icon 3 is selected, the control screen displays the control interface information of the laundry care machine.

The above control method enables the control screen to display only the laundry treatment devices present in the home, and displays them in the form of device icons. The control interface is displayed only after the device icons have been selected, thereby making the content displayed on the control screen for the first time less, and the control screen can be designed to be smaller. After the device icon of a certain laundry treatment device has been selected, only the control interface information of the laundry treatment device can be displayed on the control screen, thereby avoiding the control screen being too large and allowing each laundry treatment device to be controlled.

After step S402, the control method implemented by the main controller of the present disclosure further includes the following steps.

In step S403, determining whether a smart scene icon is selected.

Wherein, a smart scene icon is also displayed on the control screen, and the smart scene icon is used to generate a control signal that enables a cross-device coordination of multiple laundry treatment devices only after being selected. In other words, the cross-device coordination of multiple laundry treatment devices can only be controlled after the smart scene icon is selected. In other words, the cross-device coordination of multiple laundry treatment devices can be directly controlled after the smart scene icon is selected, or after the smart scene icon is selected, multiple more detailed control icons are displayed on the control screen, and the cross-device coordination of the corresponding multiple laundry treatment devices is controlled only after one of the displayed control icons is selected.

In step S404, starting to determine whether the cross-device coordination signal of the laundry treatment device can be obtained, if the smart scene icon is not selected.

That is, step S100 is only executed when the smart scene icon is not selected. In other words, the present disclosure allows cross-device coordination control on each of the laundry treatment devices by selecting a smart scene icon, or allows individual control of each laundry treatment device without selecting a smart scene icon, so as to control the laundry treatment device according to actual needs and satisfy the user's requirements for various laundry treatment scenarios. Wherein, the setting of the smart scene icon can realize cross-device coordination control of multiple laundry treatment devices on the basis of simplifying control operations, and make laundry treatment more consistent, save the user's time for treatment of the laundry.

In the case where the smart scene icon is not selected and the main controller begins to determine whether the cross-device coordination signal of the laundry treatment device can be obtained, if the main controller does not obtain the cross-device coordination signal of the laundry treatment device, then in response to the selected device icon information, the main controller controls the control screen to display the control interface information associated with the selected device icon information. Preferably, after the device icon information is selected, the control screen can only display the control interface information associated with the selected device icon information. For example, when the door without laundry treatment device is opened, that is, when no laundry treatment device generates a door opening signal, the main controller does not obtain the door opening signal of the laundry treatment device. In this case, the user can click on the device icon information on the control screen, such as clicking on icon 1 of the washing machine as shown in step S401, and the control screen will further display the control interface of the washing machine, so that the operation of the washing machine can be controlled by clicking on the control interface of the washing machine.

The above control method enables the main controller to control the operation of the desired laundry treatment device regardless of whether it obtains the cross-device coordination signal of the laundry treatment device. Furthermore, it is possible to make the control screen display only the control interface to be used on the basis of guaranteeing the control of the operation of the laundry treatment device. For example, when a user opens the door of a laundry treatment device, the control screen can display only the control interface of the laundry treatment device that opens the door. Only when the door without laundry treatment device is opened, the control interface of the laundry treatment device can be further displayed by selecting a device icon. This allows the control interfaces of multiple laundry treatment devices on the control screen to be displayed asynchronously as much as possible, thereby further avoiding an excessively large control screen size and reducing production costs.

Furthermore, the main controller stores multiple different scene modes and multiple cross-device coordination programs between different laundry treatment devices associated with different scene modes. For example, in the case where the laundry treatment device includes a washing machine, a dryer and a laundry care machine, and the scene modes include a wash and dry mode, a wash and care mode, a dry and care mode, and a wash-dry-care mode, wherein the wash and dry mode is associated with multiple cross-device coordination programs between the washing machine and the dryer, the wash and care mode is associated with multiple cross-device coordination programs between the washing machine and the laundry care machine, the dry and care mode is associated with multiple cross-device coordination programs between the dryer and the laundry care machine, and the wash-dry-care mode is associated with multiple cross-device coordination programs between the washing machine, the dryer and the laundry care machine.

It is understood that a cross-device coordination program refers to a program that can control the cross-device coordination of corresponding laundry treatment devices. For example, in the wash and dry mode, the corresponding laundry treatment devices requiring cross-device coordination are the washing machine and the dryer, and the cross-device coordination program associated with the wash and dry mode is a program that controls the cross-device coordination of the washing machine and dryer. More specifically, for example, the cross-device coordination program in this mode may include a small laundry program, a large laundry program, and a gentle laundry program, etc. The parameters such as the total washing time of the washing machine, the washing speed of the washing machine, the washing temperature of the washing machine, the start time of the dryer, the total drying time of the dryer, and the drying temperature of the dryer may be different between the small laundry program, the large laundry program, and the gentle laundry program. For example, the total washing time and the total drying time of the small laundry program are both shorter than the total washing time and the total drying time of the large laundry program. The same principle applies to other modes. For example, in the wash-dry-care mode, the corresponding laundry treatment devices requiring cross-device coordination are a washing machine, a dryer, and a laundry care machine, and the associated cross-device coordination program is a program that controls the cross-device coordination of the washing machine, the dryer, and the laundry care machine.

Possibly, as shown in FIG. 3, the control method implemented by the main controller of the present disclosure further includes the following steps.

In step S405, controlling the control screen to display the scene mode, if the smart scene icon is selected.

Possibly, step S405 further includes: controlling the control screen to display the scene mode corresponding to the laundry treatment device from which the communication signal can be read, if the smart scene icon is selected. For example, in the example of step S402, if the main controller can read the communication signals of the washing machine, dryer, and laundry care machine, the control screen only displays the scene modes corresponding to the washing machine, dryer, and laundry care machine, such as the wash and dry mode, wash and care mode, dry and care mode, and wash-dry-care mode described above.

In step S406, controlling, in response to the selected scene mode, the control screen to display each cross-device coordination program associated with the selected scene mode.

For example, when the user selects the wash and dry mode, the control screen only displays various cross-device coordination programs associated with the wash and dry mode for the user to select; when the user selects the wash and care mode, the control screen only displays the various cross-device coordination programs associated with the wash and care mode for the user to select. The same principle applies to other scene modes and will not be repeated here.

In step S407, controlling, in response to the selected cross-device coordination program, the cross-device coordination of the corresponding multiple laundry treatment devices.

For example, when the user selects the wash and dry mode, the control screen displays the various cross-device coordination programs associated with the wash and dry mode, such as the small laundry program, large laundry program and gentle laundry program introduced above. In this case, the user selects a certain cross-device coordination program, such as the small laundry program, and the main controller controls the washing machine and the dryer to operate according to the small laundry program; the same principle applies to selecting other cross-device coordination programs, which will not be repeated here.

The above control method makes the operation very simple. It is only necessary to select the scene mode you want to use to control the corresponding multiple laundry treatment devices to run according to the set program, thereby improving the effect of laundry treatment. At the same time, intelligent control of multiple laundry treatment devices can be achieved through one control screen.

As a possible embodiment, the cross-device coordination program includes starting up and shutting down the corresponding multiple laundry treatment devices in a preset order, and further includes controlling the control screen to send a prompt message when any one of the laundry treatment devices is started up or shut down.

For example, when the cross-device coordination program is a program associated with a wash and dry mode, the preset order may be that the washing machine is started up or shut down first, and the dryer may be started up within a preset time before the washing machine is shut down so as to be able to preheat, and may be shut down after the washing machine is shut down and has run for a period of time; or, the dryer may be started up only after the washing machine has finished running, and shut down after the cross-device coordination program has finished running. Wherein, when the washing machine and the dryer are started up or shut down, corresponding operation prompts are displayed on the control screen, and at the same time the washing machine and the dryer emit prompt sounds. For example, after the washing machine finishes washing, a washing completion message is displayed on the control screen, thereby reminding the user to take out the clothes in time and place the clothes in the dryer in time.

The above control method realizes multiple controls on one screen, reduces costs, and simultaneously realizes intelligent control of multiple laundry treatment devices.

It can be understood by those skilled in the art that the above-mentioned laundry treatment device includes some well-known structures, such as a processor, a controller, a memory, etc., wherein the memory includes but is not limited to a random access memory, a flash memory, a read-only memory, a programmable read-only memory, a volatile memory, a non-volatile memory, a serial memory, a parallel memory or a register, etc., and the processor includes but is not limited to a CPLD/FPGA, a DSP, an ARM processor, a MIPS processor, etc. In order to unnecessarily obscure the embodiments of the present disclosure, these well-known structures are not shown in the drawings.

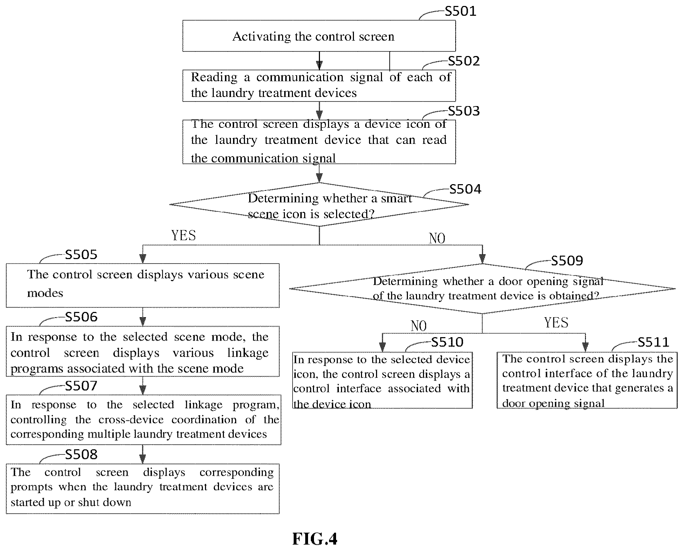

In addition, as a possible embodiment, as shown in FIG. 4, the present disclosure provides a detailed control method for a laundry treatment system, which specifically includes the following steps.

In step S501, activating the control screen.

In step S502, reading a communication signal of each of the laundry treatment devices.

In step S503, displaying, by the control screen, a device icon of the laundry treatment device that can read the communication signal.

In step S504, determining whether a smart scene icon is selected? If so, executing step S505; if not, executing step S509.

In step S505, displaying, by the control screen, various scene modes.

In step S506, displaying, by the control screen, various cross-device coordination programs associated with the scene mode, in response to the selected scene mode.

In step S507, controlling, in response to the selected cross-device coordination program, the cross-device coordination of the corresponding multiple laundry treatment devices.

In step S508, displaying, by the control screen, corresponding prompts when the laundry treatment devices are started up or shut down.

In step S509, determining whether a door opening signal of the laundry treatment device is obtained? If so, executing step S511; if not, executing step S510.

In step S510, displaying, by the control screen, a control interface associated with the device icon, in response to the selected device icon.

In step S511, displaying, by the control screen, the control interface of the laundry treatment device that generates a door opening signal.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

## Claims

1. A control method for a laundry treatment system, wherein the laundry treatment system comprises a control screen, a main controller and multiple laundry treatment devices, the control screen is communicatively connected with each of the laundry treatment devices through the main controller, and the control method implemented by the main controller comprises:
determining whether a cross-device coordination signal of the laundry treatment device can be obtained;
retrieving control interface information of the laundry treatment device that generates the cross-device coordination signal, if the cross-device coordination signal of the laundry treatment device can be obtained; and
controlling the control screen to display the control interface information.

2. The control method for the laundry treatment system according to claim 1, wherein each of the laundry treatment devices is provided with a feedback switch, each of the feedback switches being configured to generate a door opening signal when a door of the corresponding laundry treatment device is opened;
wherein the door opening signal is the cross-device coordination signal.

3. The control method for the laundry treatment system according to claim 1, wherein a smart scene icon is also displayed on the control screen, and the smart scene icon is used to generate a control signal that enables a cross-device coordination of multiple laundry treatment devices only after being selected;
before the step of "determining whether a cross-device coordination signal of the laundry treatment device can be obtained", the control method implemented by the main controller further comprises:
determining whether the smart scene icon is selected;
starting to determine whether the cross-device coordination signal of the laundry treatment device can be obtained, if the smart scene icon is not selected.

4. The control method for the laundry treatment system according to claim 3, wherein the main controller stores multiple different scene modes and multiple cross-device coordination programs between different laundry treatment devices associated with different scene modes; the control method implemented by the main controller further comprises:
controlling the control screen to display the scene mode, if the smart scene icon is selected;
controlling, in response to the selected scene mode, the control screen to display each of the multiple cross-device coordination programs associated with the selected scene mode;
controlling, in response to the selected cross-device coordination program, the cross-device coordination of the corresponding multiple laundry treatment devices.

5. The control method for the laundry treatment system according to claim 4, wherein the cross-device coordination program includes starting up and shutting down the corresponding multiple laundry treatment devices in a preset order, and further comprises controlling the control screen to send a prompt message when any one of the laundry treatment devices is started up or shut down.

6. The control method for the laundry treatment system according to claim 4, wherein before the step of "the main controller determines whether the smart scene icon is selected", the control method implemented by the main controller further comprises:
reading a communication signal of each of the laundry treatment devices to determine the laundry treatment device that can read the communication signal;
retrieving device icon information corresponding to the laundry treatment device that can read the communication signal;
controlling the control screen to display the device icon information, so that the control screen displays associated control interface information after the device icon information is selected;
wherein, the main controller stores the device icon information corresponding to each laundry treatment device, and each of the device icon information is associated with the control interface information corresponding to the laundry treatment device.

7. The control method for the laundry treatment system according to claim 6, wherein the step of "controlling the control screen to display the scene mode, if the smart scene icon is selected" further comprises:
controlling the control screen to display the scene mode corresponding to the laundry treatment device that can read the communication signal, if the smart scene icon is selected.

8. The control method for the laundry treatment system according to claim 6, wherein the control method implemented by the main controller further comprises:
controlling, in response to the selected device icon information, the control screen to display the control interface information associated with the selected device icon information, if the main controller does not obtain the cross-device coordination signal of the laundry treatment device.

9. The control method for the laundry treatment system according to claim 1, wherein the control screen and the main controller are constructed on one of the laundry treatment devices.

10. The control method for the laundry treatment system according to claim 4, wherein the laundry treatment device comprises a washing machine, a dryer and a laundry care machine, and the scene modes include a wash and dry mode, a wash and care mode, a dry and care mode, and a wash-dry-care mode, wherein the wash and dry mode is associated with multiple cross-device coordination programs between the washing machine and the dryer, the wash and care mode is associated with multiple cross-device coordination programs between the washing machine and the laundry care machine, the dry and care mode is associated with multiple cross-device coordination programs between the dryer and the laundry care machine, and the wash-dry-care mode is associated with multiple cross-device coordination programs between the washing machine, the dryer and the laundry care machine.
